Europäisches Patentamt

European Patent Office

Office européen des brevets

(19)

(11) Veröffentlichungsnummer: **0 133 992**
A2

(12) **EUROPÄISCHE PATENTANMELDUNG**

(21) Anmeldenummer: **84109127.5**

(22) Anmeldetag: **01.08.84**

(51) Int. Cl.⁴: **F 16 K 24/04**

(30) Priorität: **02.08.83 DE 3327846**

(43) Veröffentlichungstag der Anmeldung: **13.03.85**
**Patentblatt 85/11**

(84) Benannte Vertragsstaaten: **AT BE CH DE FR GB IT LI LU NL SE**

(71) Anmelder: **HANS SASSERATH & CO KG,
Mühlenstrasse 62, D-4052 Korschenbroich 1 (DE)**

(72) Erfinder: **Sasserath, Arend, Dahlener Strasse 693,
D-4050 Mönchengladbach 2 (DE)**
Erfinder: **Hecking, Willi, Andreasstrasse 2,
D-4050 Mönchengladbach 2 (DE)**

(74) Vertreter: **Weisse, Jürgen, Dipl.-Phys. et al,
Patentanwälte Dipl.-Phys. Jürgen Weisse Dipl.-Chem.
Dr. Rudolf Wolgast Bökenbusch 41 Postfach 11 03 86,
D-5620 Velbert 11 Langenberg (DE)**

(54) **Entlüftungsventil.**

(57) Ein Entlüftungsventil, insbesondere für Heizungsanlagen, enthält an der Oberseite eines Gehäuses (10) einen nach oben ragenden Gehäuseansatz (20), der einen Ventilsitz (22) bildet. Ein Ventilteller (24), der mit dem Ventilsitz (22) ein Ventil (16) bildet, ist mit einem Ventilstößel (26) und einem Ventilteller (34) verbunden, der mit einem Ventilsitz (32) zusammenwirkt. Eine Feder (74) drückt den Ventilteller (24) in Schließstellung. Von einem Schwimmer (14) ist das Ventil (16) über Betätigungsmittel (18) aufziehbar, wenn der Flüssigkeitsspiegel im Gehäuse (10) sinkt. Das Ventil (16) ist dabei hinreichend oberhalb der Flüssigkeit angeordnet, was einer Verschmutzung des Ventils (16) entgegenwirkt. Das Ventil (16) ist nach Abnehmen einer Ventilsitzhülse (30) leicht zugänglich, wobei das untere Ventil 32, 34 schließt. Kritische Teile des Ventiltellers 24 sind leicht austauschbar.

Patentanmeldung


Hans Sasserath & Co. KG, Mühlenstraße 62,
D-4052 Korschenbroich 1


Entlüftungsventil


Die Erfindung betrifft ein Entlüftungsventil enthaltend

(a)   ein Gehäuse, das mit einem zu entlüftenden
      Flüssigkeitssystem verbindbar ist,

(b)   einen in dem Gehäuse vertikal beweglichen Schwimmer,

(c)   ein am oberen Ende des Gehäuses angeordnetes Ventil
      und

(d)   Betätigungsmittel, über welche das Ventil von dem
      Schwimmer im öffnenden Sinne betätigbar ist, wenn
      der Schwimmer ein vorgegebenes Niveau unterschreitet.

Solche Entlüftungsventile werden beispielsweise in
Heizungsanlagen verwendet. Sie können aber auch unter
Einsatz anderer Werkstoffe bei industriellen Prozessen
Anwendung finden. Ein Flüssigkeitssystem ist normalerweise abgeschlossen und steht unter Druck. Wenn aus

0133992

der Flüssigkeit Luft abgeschieden wird, sinkt der Flüssigkeitsspiegel in dem Gehäuse und damit der Schwimmer infolge der sich im oberen Teil des Gehäuses sammelnden Flüssigkeit. Über die Betätigungsmittel wird dann das Ventil von dem Schwimmer im öffnenden Sinne betätigt, und die angesammelte Luft kann über das Ventil entweichen.

Bei bekannten Entlüftungsventilen dieser Art tritt folgendes Problem auf: Da die Baugröße des Entlüftungsventils mit dem Gehäuse aus Preis- und Einbaugründen begrenzt ist, ist der Schwimmer entsprechend klein. Es ergeben sich dadurch nur geringe Stellkräfte am Ventil. Der Ventilsitz ist bei bekannten Entlüftungsventilen am Gehäuse im Bereich des Gehäuseinnenraumes und in unmittelbarer Nähe der Betätigungsmittel angeordnet. Die zu entlüftenden Flüssigkeitssysteme, z.B. eine Heizungsanlage, enthalten häufig Schmutzteilchen, die beim Entlüftungsvorgang mitgerissen werden. Die geringen Stellkräfte im Ventil führen dann dazu, daß das Ventil nicht mehr einwandfrei schließt. Es kann hierdurch ein unkontrollierter Flüssigkeitsaustritt stattfinden.

Es ist aus diesem Grunde bekannt, das Ventil durch eine aufgesetzte Kappe von Hand zu verschließen. Damit ist jedoch das Entlüftungsventil vollständig außer Funktion. Meistens mußte die vollständige Armatur in einem solchen Fall ausgetauscht werden. Damit dies möglich war, wurde die Armatur mit einem vorgeschalteten Absperrventil ausgerüstet. Es ist auch bekannt, ein solches vorgeschaltetes Absperrventil automatisch arbeitend auszubilden. Es ist weiterhin bekannt, ein solches Absperrventil in die Armatur des Entlüftungsventils zu integrieren. Damit sollte dem Betreiber der Anlage die Möglichkeit gegeben werden, bei Störungen durch Reinigen und gegebenenfalls Austausch der kritischen Teile das Gerät

0133992

wieder in einen funktionsfähigen Zustand zu versetzen.

Der Erfindung liegt die Aufgabe zugrunde, ein Entlüftungsventil der eingangs definierten Art so auszubilden, daß eine Beeinträchtigung der Funktion des Entlüftungsventils durch mitgerissene Schmutzteilchen weitgehend vermieden wird.

Speziell soll eine Möglichkeit geschaffen werden, das Entlüftungsventil leicht zu reinigen und gegebenenfalls auch Ventilsitz und Ventilschließkörper ohne Schwierigkeiten austauschbar zu machen.

Erfindungsgemäß wird diese Aufgabe dadurch gelöst, daß

(e) an der Oberseite des Gehäuses ein nach oben ragender, länglicher Gehäuseansatz vorgesehen ist, der in seinem oberen Teil einen nach unten weisenden Ventilsitz bildet,

(f) in dem Gehäuseansatz ein in Schließrichtung vorbelasteter Ventilteller geführt ist, der mit einem sich durch den Gehäuseansatz erstreckenden Übertragungsglied verbunden ist, und

(g) die Betätigungsmittel an dem Übertragungsglied angreifen.

Auf diese Weise sitzen die Dichtflächen des Entlüftungsventils in größerem Abstand von dem Flüssigkeitsbereich. Die Wahrscheinlichkeit einer Verschmutzung durch Schmutzteilchen aus der Flüssigkeit wird dadurch wesentlich reduziert.

Ausgestaltungen der Erfindung sind Gegenstand der Unteransprüche.

Zwei Ausführungsbeispiele der Erfindung sind nachstehend unter Bezugnahme auf die zugehörigen Zeichnungen näher erläutert:

Fig. 1    zeigt ein Vertikalschnitt durch ein Entlüftungsventil.

Fig. 2    zeigt eine Einzelheit des Entlüftungsventils in einer Stellung, die einen Austausch der Dichtung des Ventilschließkörpers ermöglicht.

Fig. 3    zeigt einen Schnitt längs der Linie III-III von Fig. 2.

Fig. 4    zeigt einen Vertikalschnitt durch eine abgewandelte Ausführungsform des Entlüftungsventils.

Das Entlüftungsventil enthält ein Gehäuse 10, das über einen am unteren Ende des Gehäuses 10 angeordneten Nippel 12 mit einem zu entlüftenden Flüssigkeitssystem verbindbar ist. In dem Gehäuse ist ein Schwimmer 14 vertikal beweglich. Am oberen Ende des Gehäuses 10 ist ein Ventil 16 angeordnet. Das Ventil ist über Betätigungsmittel 18 von dem Schwimmer 14 im öffnenden Sinne betätigbar, wenn der Schwimmer 14 ein vorgegebenes Niveau unterschreitet. Zur Vermeidung einer Verschmutzung des Ventils ist an der Oberseite des Gehäuses 10 ein nach oben ragender, länglicher Gehäuseansatz 20 vorgesehen, der in seinem oberen Teil einen nach unten weisenden Ventilsitz 22 bildet. In dem Gehäuseansatz 20 ist ein in Schließrichtung vorbelasteter Ventilteller 24 geführt, der mit einem sich durch den Gehäuseansatz erstreckenden Übertragungsglied 26 verbunden ist. Die Betätigungsmittel 18 greifen an dem Übertragungsglied an. Der Gehäuseansatz weist einen zylindrischen Kragen 28 an der Oberseite des Gehäuses 10 und eine auf den Kragen 28 aufgesetzte, den Ventilsitz bildende Ventilsitzhülse 30 auf. Am unteren Ende des Gehäuseansatzes 20 ist auf der Innenseite des Gehäuses 10 ein weiterer zum Innenraum des Gehäuses weisender Ventilsitz 32 gebildet. Das Übertragungsglied 26 ist ein durch den weiteren Ventilsitz 32 hindurchragender Ventilstößel, der an seinem Ende einen mit dem weiteren Ventilsitz 32 zusammenwirkenden, weiteren Ventilteller 34 aufweist. An diesem Ventilteller 34 greifen die Betätigungsmittel 18 an.

Die Betätigungsmittel 18 enthalten einen Hebel 36, der auf einem Schwenkzapfen 38 schwenkbar an dem Schwimmer 14 angelenkt ist. Der Hebel 36 greift an seinem freien Ende mit u-förmigen Ausnehmungen 40 über Zapfen 42, die an dem weiteren Ventilteller angebracht sind. Ein Mitnehmer 44 mit einem Kopf 46 erstreckt sich durch einen Durchbruch 48. Der Durchbruch 48 ist zwischen dem Schwenkzapfen 38 und der u-förmigen Ausnehmung 40 in dem Hebel 36 vorgesehen. Der Mitnehmer 44 weist einen Anschlag 50 auf der unteren, dem Hebel 36 abgewandten Seite des Schwimmers 14 auf.

Wenn der Schwimmer 14 sich durch das Absinken des Flüssigkeitsspiegels nach unten bewegt, so wird das Ventil 16 davon zunächst noch nicht beeinflußt. Es wird der Hebel 36 um die Zapfen 42 verschwenkt, wobei sich der u-förmig ausgestaltete Hebel (36) mit seinen Ausnehmungen (40) auf der Innenseite des Gehäuses (10) abstützt.

Erst nachdem der Schwimmer einen konstruktiv festgelegten Weg durchlaufen hat, wird das Ventil (16) über die Zapfen (42), über die der Hebel (36) mit den Ausnehmungen (40) greift, aufgezogen. Gleichzeitig wird auch das von dem Ventilsitz 32 und dem Ventilteller 34 gebildete Ventil geöffnet. Angesammelte Luft kann dadurch aus dem System entweichen. Das Hauptventil 16 ist dabei in hinreichendem Abstand von der Flüssigkeitoberfläche angeordnet, so daß eine Verschmutzung durch in der Flüssigkeit mitgeführte Schmutzpartikel praktisch nicht stattfinden kann.

Das untere Ventil 32,34 das unmittelbar im Bereich der Betätigungsmittel 18 sitzt, hat lediglich die Funktion eines Hilfsventils, welches eine leichte Reinigung oder Reparatur des Ventils 16 gestattet. Wenn nämlich die Ventilsitzhülse 30 abgenommen wird, dann schließt das Ventil 32,34 unter dem Einfluß der auf den Ventilteller 24 des Ventils 16 wirkenden Federbelastung. Das Flüssigkeitssystem bleibt geschlossen, während der Ventilteller 24 des Ventils 16 zugänglich ist.

Der obere Ventilteller 24 weist einen Grundkörper 52 von flach-zylindrischer Grundform auf. In dem Grundkörper 52 ist auf dessen Oberseite eine zu einer Seite hin offene, u-förmige Vertiefung 54 mit einem übergreifenden Rand 56 gebildet. Der obere Ventilteller 24 weist weiterhin einen scheibenförmigen Teil 58 auf. Der scheibenförmige Teil 58 bildet einen über den Grundkörper 52 seitlich überstehenden Rand 60. Unterhalb dieses Randes 60 besitzt der scheibenförmige Teil einen zylindrischen, mit der Mantelfläche des Grundkörpers 52 fluchtenden Oberflächenabschnitt 62. Auf der Oberseite trägt der scheibenförmige Teil 58 eine Dichtung 64. Der scheibenförmige Teil 58 ist mit einem auf der Unterseite angebrachten, zentralen, pilzförmigen Fuß 66, der einen zylindrischen Schaft 68 und einen scheibenförmigen Kopf 70 aufweist, in die u-förmige Vertiefung 54 eingeschoben, wobei der übergreifende Rand 56 über den scheibenförmigen Kopf 70 greift. Auf dem Grundkörper 52 ist eine Hülse 72 verschiebbar geführt, welche unter dem Einfluß der Feder 74 an dem überstehenden Rand 60 des scheibenförmigen Teils 58 anliegt. Die Feder 74 stützt sich an der Stirnfläche des Kragens 28 ab und dient gleichzeitig als Schließfeder, welche den Ventilteller 24 mit der Dichtung 64 gegen den Ventilsitz 22 zu drücken trachtet. Die Hülse 72 dient dabei als Federteller.

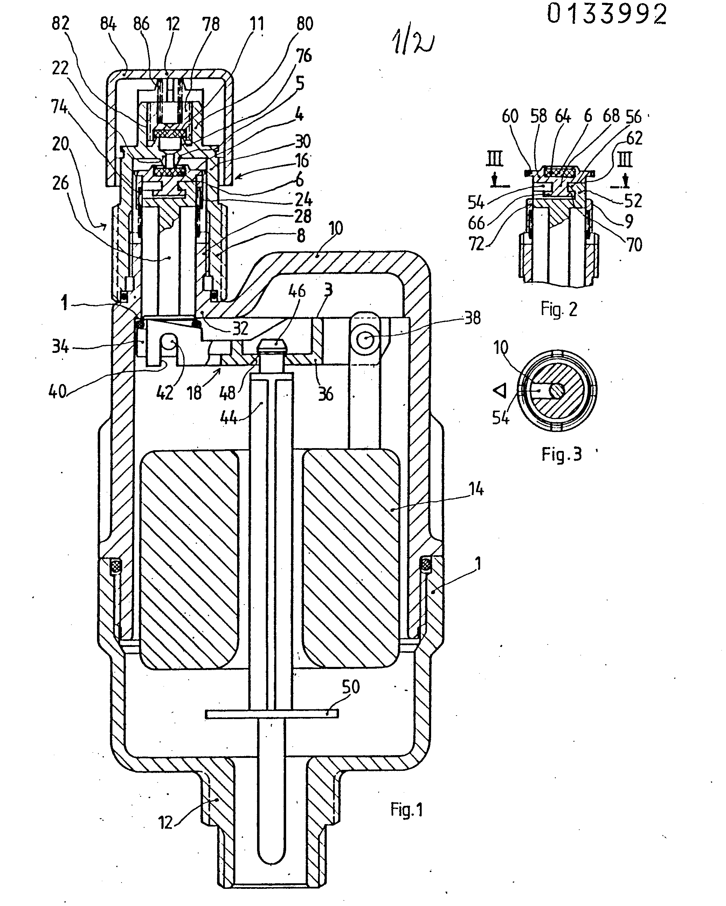

In der in Fig. 1 dargestellten Betriebsstellung liegt die Hülse 72 an dem Rand 60 an. Sie greift dabei über den zylindrischen Oberflächenabschnitt 62 und sichert den scheibenförmigen Teil 58 in radialer Richtung. Der scheibenförmige Teil wird dadurch mittels des Fußes 66 an dem Grundkörper 52 gehalten. Nach Zurückschieben der Hülse 72, wie in Fig. 2 dargestellt ist, kann der scheibenförmige Teil 58 seitlich herausgeschoben werden, so daß eine Reinigung, Reparatur oder ein Ersatz dieses Teils möglich ist.

In manchen Fällen ist es erforderlich, zusätzlich eine "Belüftungssperre" vorzusehen. Zu diesem Zweck kann die Ventilsitzhülse 30 einen zweiten nach außen gerichteten Ventilsitz 76 aufweisen. Der zweite Ventilsitz 76 wirkt mit einem federbelasteten Ventilschließkörper 78 zur Bildung einer Belüftungssperre zusammen. Der Ventildurchgang des Ventils 16 mündet dabei innerhalb des Ventilsitzes 76. Bei der dargestellten bevorzugten Ausführungsform weist die Ventilsitzhülse 30 im Abstand um den zweiten Ventilsitz 76 herum einen nach außen ragenden Kragen 80 auf. In dem Kragen 80 ist der Ventilschließkörper 78 mit radialen Rippen 82 geführt. Das obere Ende der Ventilsitzhülse 30 mitsamt dem Kragen 80 ist durch eine Schutzkappe 84 abgedeckt. Eine Belastungsfeder 86 für den Ventilschließkörper 78 stützt sich an der Schutzkappe 84 ab.

Bei der beschriebenen Konstruktion ergibt sich die Möglichkeit, Ober- und Unterteil des Gehäuses 10 nicht in der in Fig. 1 dargestellten Weise miteinander zu verschrauben sondern Sie unlösbar miteinander zu verbinden, beispielsweise bei Blechkonstruktionen durch Bördelung, da der Gehäuseinnenraum nicht zugänglich zu sein braucht.

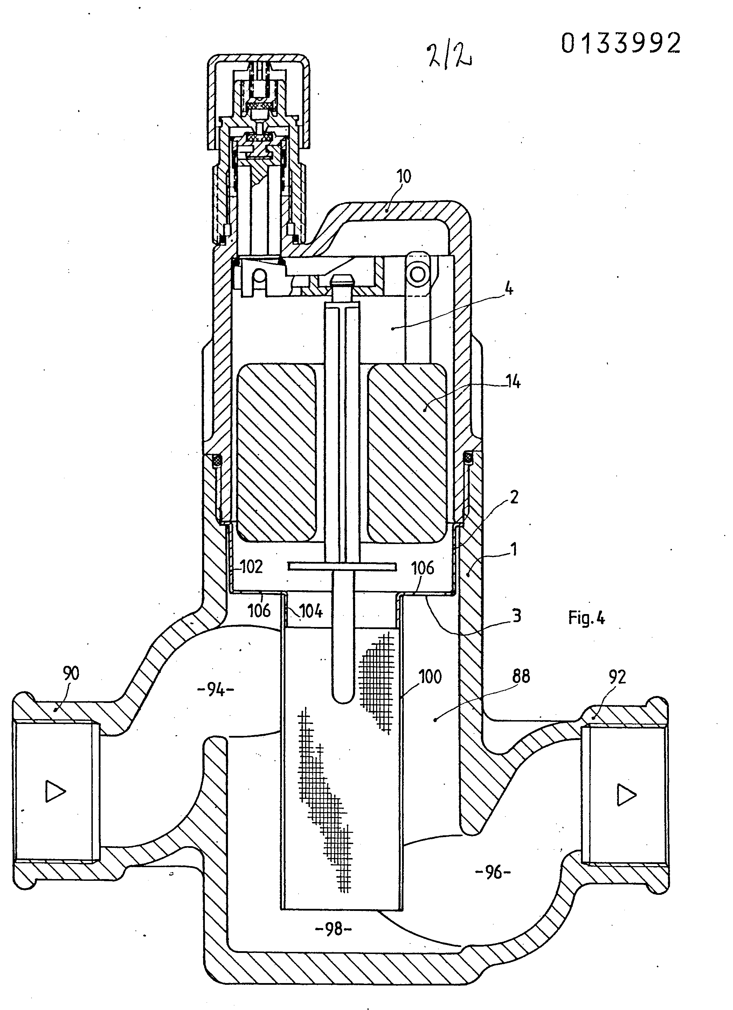

Die Ausführungsform nach Fig. 4 entspricht hinsichtlich des eigentlichen Entlüftungsventils der Ausführung nach Fig. 1. Entsprechende Teile sind mit den gleichen Bezugszeichen versehen wie dort.

Bei der Ausführungsform von Fig. 4 sind in dem Gehäuse 10 unterhalb des Schwimmers 14 Mittel 88 zum Abscheiden von Gas aus einer umlaufenden Flüssigkeit vorgesehen. Bei der bevorzugten Ausführungsform weist das Gehäuse 10 einen Einlaßstutzen 90 und einen diesem gegenüberliegenden Auslaßstutzen 92 auf. Die Einlaß- und Auslaßstutzen 90 bzw. 92 gehen in Einlaß- bzw. Auslaßkanäle 94 bzw 96 über. Die Einlaß- und Auslaßkanäle 94 bzw. 96 münden in einer Entspannungskammer 98 höhenversetzt und so, daß eine langsam rotierende Bewegung der Flüssigkeit erzeugt wird. Zentral in der Entspannungskammer 98 ist ein zylindrischer Siebkörper 100 angeordnet, der eine Anlagerung und Abscheidung auch kleiner Luft- und Gasbläschen ermöglicht. In das Gehäuse 10 ist unterhalb des Schwimmers 14 ein schalenförmiger Einsatz 102 eingesetzt. Der Einsatz 102 besitzt einen zentralen, von einem Kragen 104 umgebenen Durchbruch. Der Siebkörper 100 sitzt auf dem Kragen 104, so daß das Innere des Siebkörpers über den Durchbruch mit dem Raum oberhalb des Einsatzes 102 in Verbindung steht. Der Einsatz 102 weist auf seinem Boden um den Kragen 104 herum einen Kranz von Durchbrüchen 106 auf.

Patentansprüche

1.  Entlüftungsventil enthaltend

    (a)  ein Gehäuse (10), das mit einem zu entlüftenden Flüssigkeitssystem verbindbar ist,

    (b)  einen in dem Gehäuse (10) vertikal beweglichen Schwimmer (14),

    (c)  ein am oberen Ende des Gehäuses (10) angeordnetes Ventil (16) und

    (d)  Betätigungsmittel (18), über welche das Ventil (16) von dem Schwimmer (14) im öffnenden Sinne betätigbar ist, wenn der Schwimmer (14) ein vorgegebenes Niveau unterschreitet,

    dadurch gekennzeichnet, daß

    (e)  an der Oberseite des Gehäuses (10) ein nach oben ragender, länglicher Gehäuseansatz (20) vorgesehen ist, der in seinem oberen Teil einen nach unten weisenden Ventilsitz (22) bildet,

    (f)  in dem Gehäuseansatz ein in Schließrichtung vorbelasteter Ventilteller (24) geführt ist, der mit einem sich durch den Gehäuseansatz (20) erstreckenden Übertragungsglied (26) verbunden ist, und

(g)   die Betätigungsmittel (18) an dem Übertragungs-
      glied (26) angreifen.

2.   Entlüftungsventil nach Anspruch 1, dadurch
     gekennzeichnet, daß der Gehäuseansatz (20)

     (a)   einen zylindrischen Kragen (28) an der Oberseite
           des Gehäuses (10) und

     (b)   eine auf dem Kragen (28) aufgesetzte, den Ventilsitz (22) bildende Ventilsitzhülse (30) aufweist.

3.   Entlüftungsventil nach Anspruch 1 oder 2, dadurch
     gekennzeichnet, daß

     (a)   am unteren Ende des Gehäuseansatzes (20) auf der
           Innenseite des Gehäuses (10) ein weiterer, zum
           Innenraum des Gehäuses (10) weisender Ventilsitz (32) gebildet ist,

     (b)   das Übertragungsglied (26) ein durch den
           weiteren Ventilsitz hindurchragender Ventilstößel
           ist, der an seinem Ende einen mit dem weiteren
           Ventilsitz (32) zusammenwirkenden weiteren
           Ventilteller (34) aufweist.

4.   Entlüftungsventil nach Anspruch 2 oder 3, dadurch
     gekennzeichnet, daß der obere Ventilteller (24)

     (a)   einen Grundkörper (52) von flach zylindrischer
           Grundform aufweist,

     (b)   in dem Grundkörper (52) auf dessen Oberseite
           eine zu einer Seite hin offene, u-förmige Vertiefung (54) mit einem übergreifenden Rand (56)
           gebildet ist,

(c)   der obere Ventilteller (24) weiterhin einen scheibenförmigen Teil (58) aufweist, der

$(c_1)$ einen über den Grundkörper (52) seitlach überstehenden Rand (60) bildet,

$(c_2)$ unterhalb dieses Randes (60) einen zylindrischen, mit der Mantelfläche des Grundkörpers fluchtenden Oberflächenabschnitt (62) besitzt,

$(c_3)$ auf der Oberseite eine Dichtung (64) trägt und

$(c_4)$ mit einem auf der Unterseite angebrachten, pilzförmigen Fuß (66), der einen zylindrischen Schaft (68) und einen scheibenförmigen Kopf (70) aufweist, in die u-förmige Vertiefung (54) eingeschoben ist, wobei der übergreifende Rand (56) über den scheibenförmigen Kopf (70) greift,

(d)   auf dem Grundkörper (52) eine Hülse (72) verschiebbar geführt ist, welche unter dem Einfluß einer Feder (74) an dem überstehenden Rand (60) des scheibenförmigen Teils (58) anliegt.

5.   Entlüftungsventil nach Anspruch 2, dadurch gekennzeichnet, daß

(a)   die Ventilsitzhülse (30) einen zweiten, nach außen weisenden Ventilsitz (76) aufweist und

(b)   der zweite Ventilsitz (76) mit einem federbelasteten Ventilschließkörper (78) zur Bildung einer Belüftungssperre zusammenwirkt.

6. Entlüftungsventil nach Anspruch 5, dadurch gekennzeichnet, daß

  (a) die Ventilsitzhülse (30) im Abstand um den zweiten Ventilsitz (76) herum einen nach außen ragenden Kragen (80) aufweist,

  (b) in dem Kragen (80) der Ventilschließkörper (78) mit radialen Rippen (82) geführt ist,

  (c) das obere Ende der Ventilsitzhülse (30) mitsamt dem Kragen (80) durch eine Schutzkappe (84) abgedeckt ist und

  (d) eine Belastungsfeder (86) für den Ventilschließkörper (78) sich an der Schutzkappe (84) abstützt.

7. Entlüftungsventil nach einem der Ansprüche 1 bis 6, dadurch gekennzeichnet, daß in dem Gehäuse (10) unterhalb des Schwimmers (14) Mittel (88) zum Abscheiden von Gas aus einer umlaufenden Flüssigkeit vorgesehen sind.

8. Entlüftungsventil nach Anspruch 7, dadurch gekennzeichnet, daß

  (a) das Gehäuse (10) einen Einlaßstutzen (90) und einen diesem gegenüberliegenden Auslaßstutzen (92) aufweist, die in Einlaß- bzw. Auslaßkanäle (94 bzw. 96) übergehen, welche in einer Entspannungskammer (98) höhenversetzt und so münden, daß eine langsam rotierende Bewegung der Flüssigkeit erzeugt wird, und

  (b) zentral in der Entspannungskammer (98) ein zylindrischer Siebkörper (100) angeordnet ist, der eine Anlagerung und Abscheidung auch kleiner Luft- und Gasbläschen ermöglicht.

9. Entlüftungsventil nach Anspruch 8, dadurch gekennzeichnet, daß

    (a)   in das Gehäuse (10) unterhalb des Schwimmers (14) ein schalenförmiger Einsatz (102) mit einem zentalen, von einem Kragen (104) umgebenen Durchbruch eingesetzt ist,

    (b)   der Siebkörper (100) auf dem Kragen (104) sitzt, so daß das Innere des Siebkörpers (100) über den Durchbruch mit dem Raum oberhalb des Einsatzes (102) in Verbindung steht, und

    (c)   der Einsatz (102) um den Kragen (104) herum einen Kranz von Durchbrüchen (106) aufweist.

0133992

1/2

Fig. 1

Fig. 2

Fig. 3

2/2     0133992

Fig. 4